# EUROPÄISCHE PATENTSCHRIFT

(11) **EP 4 407 937 B1**
(45) Veröffentlichungstag und Bekanntmachung des Hinweises auf die Patenterteilung: **26.03.2025**
(21) Anmeldenummer: 23153719.2
(22) Anmeldetag: 27.01.2023
(51) Int. Cl.: H04L 12/12

(54) **SYSTEM UND VERFAHREN ZUR ERMITTLUNG VON FUNKREICHWEITEN**
SYSTEM AND METHOD FOR DETERMINING RADIO COVERAGE
SYSTÈME ET PROCÉDÉ DE DÉTERMINATION DE COUVERTURE RADIO

(43) Veröffentlichungstag der Anmeldung: 31.07.2024
(73) Patentinhaber: ise Individuelle Software und Elektronik GmbH, 26122 Oldenburg (DE)
(72) Erfinder: Sahm, Christoph, 26131 Oldenburg (DE)
(74) Vertreter: Angerhausen, Christoph

(56) Entgegenhaltungen:
- US-A1- 2007 140 199
- US-A1- 2018 338 187
- US-A1- 2022 165 146

## Beschreibung

### TECHNISCHES GEBIET

Die hier offenbarte Erfindung liegt auf dem Gebiet der Funknetzwerke, insbesondere Funknetzwerken in Gebäuden sowie der Installation und Konfiguration solcher Netzwerke.

### HINTERGRUND

Bei der modernen Ausstattung von Wohnungen und Gebäuden werden zunehmend Geräte der Gebäudetechnik eingesetzt, die Teile des Gebäudes steuern, beispielsweise Heizungen, Fenster, Jalousien, Türen oder Lautsprecher, oder Messungen vornehmen, beispielsweise Messungen der Temperatur, Luftfeuchtigkeit oder Helligkeit. Diese Geräte werden in aller Regel miteinander vernetzt, um eine Steuerung aus der Ferne zu ermöglichen oder um die Messungen bestimmter Geräte als Einflußgrößen für die Steuerung anderer Geräte zu verwenden.

Bei der Einrichtung solcher Geräte und deren Vernetzung wird vorab geprüft, ob die Stellen in dem Gebäude, an denen die Geräte aufgestellt oder angebracht werden, von einem Funknetzwerk des Gebäudes oder einer betreffenden Wohnung ausreichend abgedeckt werden. Zu diesem Zweck verwendet man üblicherweise ein mobiles Gerät, beispielsweise ein Notebook, das sich mittels einer Antenne mit dem Funknetzwerk verbindet und mit dem eine Messung der lokalen Signalstärke durchgeführt werden kann. Das Notebook kann an den Stellen, die für Geräte der Gebäudetechnik vorgesehen sind, aufgestellt werden, um die Messung dort durchzuführen.

In vielen Topologien wird darüberhinaus gefordert, dass die einzelnen Geräte der Gebäudetechnik nicht über einen zentralen Router des Funknetzwerks miteinander kommunizieren, sondern auf möglichst direktem Wege eine Peer-to-Peer-Verbindung eingehen. Um zu bestimmen, ob zwei Geräte an zwei vorgesehenen Stellen in dem Gebäude miteinander kommunizieren können, müssen also zwei Mobilgeräte (Notebooks, Smartphones etc.) an diesen Stellen aufgestellt werden. Jedes der Mobilgeräte verfügt über eine Antenne und Diagnosesoftware. Mittels der Diagnosesoftware kann das jeweils andere Mobilgerät ausgewählt werden und die Signalstärke des anderen Mobilgeräts an der Antenne gemessen werden. Als Antenne wird für solche Zwecke üblicherweise eine USB-Funkschnittstelle verwendet, beispielsweise ein Funk-USB-Interface-Stick, der an das Mobilgerät angeschlossen wird. Ein konkretes Beispiel ist der "KNX RF USB Interface Stick" für das KNX-Protokoll, das in der Gebäudetechnik vielfach Verwendung findet. Solche USB-Funkschnittstellen verfügen über einen Prozessor, der in der Lage ist, eintreffende Signale zu verarbeiten und Signale zu versenden.

Mitunter erfordert die Einrichtung der einzelnen Geräte, dass an mehr als zwei Messpunkten gleichzeitig gemessen werden muss - beispielsweise, um Peer-to-Peer-Verbindungen über mehrere Geräte (nodes) hinweg zu erstellen. Mit dem oben skizzierten Vorgehen werden dann ebensoviele Mobilgeräte wie Messstellen benötigt, wobei sämtliche Mobilgeräte wie beschrieben ausgestattet sein müssen, um eine vollständige Messung vorzunehmen. Eine Alternative wäre, mit lediglich zwei solcher Geräte sämtliche Kombinationen von Messpunkten zu erfassen, was recht aufwendig ist.

US 2007 / 0140199 A1 offenbart ein mobiles Gerät mit einem ersten Mikroprozessor, der einen inaktiven und einen aktiven Modus aufweist, und einem zweiten Mikroprozessor, der zur drahtlosen Datenübertragung eingerichtet ist. Ein Kommunikationsanschluss ist eingerichtet, um Daten von dem zweiten Prozessor an den ersten Prozessor zu übertragen, wobei der zweite Prozessor eingerichtet ist, ein Aktivierungssignal an den ersten Prozessor zu übertragen, und der erste Prozessor eingerichtet ist, den Kommunikationsanschluss als Antwort auf das Aktivierungssignal zu öffnen und Daten des zweiten Prozessors durch den Kommunikationsanschluss zu empfangen.

### ZUSAMMENFASSUNG

Ausführungsformen der Erfindung betreffen ein System, umfassend: Wenigstens zwei Funk-USB-Schnittstellen, wobei wenigstens eine der Funk-USB-Schnittstellen von einer eigenen Spannungsquelle versorgt wird und wenigstens eine der Funk-USB-Schnittstellen mit einem mobilen oder stationären Gerät verbunden ist, das über eine USB-Datenleitung verfügt, und durch das es mit Spannung versorgt wird; wobei jede der Funk-USB-Schnittstellen eingerichtet ist, zu prüfen, ob diese an eine USB-Datenleitung angeschlossen ist; wobei die jeweilige Funk-USB-Schnittstelle bei fehlender USB-Datenleitung in einen Diagnosemodus eintritt, der das Setzen eines oder mehrerer Kommunikationsparameter auf voreingestellte Werte umfasst; und wobei die jeweilige Funk-USB-Schnittstelle bei Vorliegen einer USB-Datenleitung mit einer Diagnosesoftware auf dem mobilen beziehungsweise stationären Gerät in Verbindung tritt, wobei die Diagnosesoftware eingerichtet ist, andere Funk-USB-Schnittstellen zu erkennen, die in den Diagnosemodus eingetreten sind, und für diese Funk-USB-Schnittstellen Messungen der Verbindungsqualität mit den Funk-USB-Schnittstellen durchzuführen.

Weitere Ausführungsformen betreffen ein System, umfassend: Wenigstens zwei Funk-USB-Schnittstellen, wobei wenigstens eine der Funk-USB-Schnittstellen von einer eigenen Spannungsquelle versorgt wird und wenigstens eine der Funk-USB-Schnittstellen mit einem mobilen oder stationären Gerät verbunden ist, das über eine USB-Datenleitung verfügt und durch das es mit Spannung versorgt wird; wobei jede der Funk-USB-Schnittstellen einen Schalter enthält oder eine Benutzeroberfläche mit einer Schaltfläche anzeigt, bei dessen/deren Betätigung durch einen Anwender die jeweilige Funk-USB-Schnittstelle in einen Diagnosemodus eintritt, der das Setzen eines oder mehrerer Kommunikationsparameter auf voreingestellte Werte umfasst; und wobei die jeweilige Funk-USB-Schnittstelle bei Vorliegen einer USB-Datenleitung mit einer Diagnosesoftware auf dem mobilen Gerät in Verbindung tritt, wobei die Diagnosesoftware eingerichtet ist, andere Funk-USB-Schnittstellen zu erkennen, die in den Diagnosemodus eingetreten sind, und für diese Funk-USB-Schnittstellen Messungen der Verbindungsqualität mit den Funk-USB-Schnittstellen durchzuführen.

Ausführungsformen der Erfindung betreffen weiter ein Verfahren, umfassend: Prüfen, durch eine Funk-USB-Schnittstelle, ob diese an eine USB-Datenleitung eines mobilen oder stationären Geräts angeschlossen ist; falls die Funk-USB-Schnittstelle nicht an eine USB-Datenleitung angeschlossen ist, Eintreten in einen Diagnosemodus, der das Setzen eines oder mehrerer Kommunikationsparameter auf voreingestellte Werte umfasst; und falls die Funk-USB-Schnittstelle an eine USB-Datenleitung angeschlossen ist, Eintreten in eine Verbindung mit einer Diagnosesoftware auf dem mobilen beziehungsweise stationären Gerät, Erkennen anderer Funk-USB-Schnittstellen, die in den Diagnosemodus eingetreten sind, durch die Diagnosesoftware, und Durchführen von Messungen der Verbindungsqualität mit den Funk-USB-Schnittstellen.

Eine weitere Ausführungsform betrifft ein Verfahren, umfassend: Eintreten einer Funk-USB-Schnittstelle in einen Diagnosemodus als Antwort auf Betätigen eines Schalters oder eine Schaltfläche einer von der Funk-USB-Schnittstelle angezeigten Benutzeroberfläche durch einen Anwender, wobei das Eintreten in den Diagnosemodus das Setzen eines oder mehrerer Kommunikationsparameter auf voreingestellte Werte umfasst; Prüfen, durch eine Funk-USB-Schnittstelle, ob diese an eine USB-Datenleitung eines mobilen oder stationären Geräts angeschlossen ist; und falls die Funk-USB-Schnittstelle an eine USB-Datenleitung angeschlossen ist, Eintreten in eine Verbindung mit einer Diagnosesoftware auf dem mobilen beziehungsweise stationären Gerät, Erkennen anderer Funk-USB-Schnittstellen, die in den Diagnosemodus eingetreten sind, durch die Diagnosesoftware, und Durchführen von Messungen der Verbindungsqualität mit den Funk-USB-Schnittstellen.Ausführungsformen der Erfindung betreffen außerdem ein computerlesbares Medium mit darauf gespeicherten Befehlen, die, wenn sie durch einen oder mehrere Prozessoren ausgeführt werden, die Schritte eines der hier offenbarten Verfahren durchführen.

### KURZE BESCHREIBUNG DER ZEICHNUNGEN

Figur 1 zeigt ein System gemäß dem Stand der Technik.
Figur 2 zeigt ein erfindungsgemäßes System.
Figur 3 zeigt ein erfindungsgemäßes Verfahren.

### AUSFÜHRLICHE BESCHREIBUNG

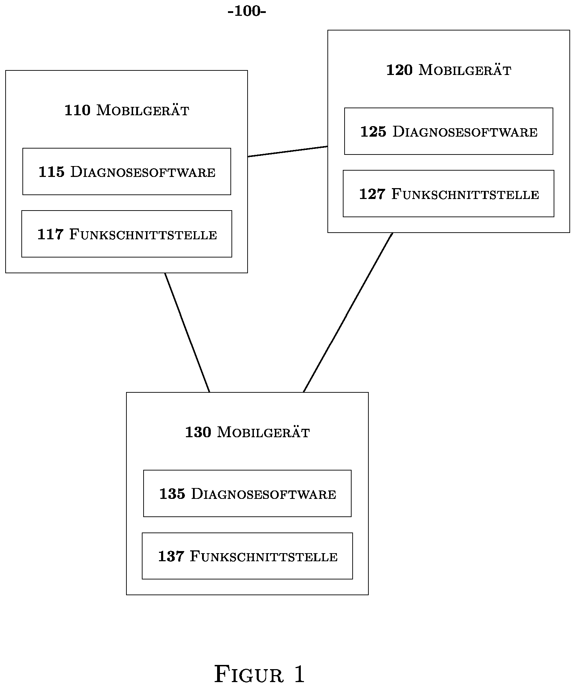

Figur 1 zeigt ein System nach dem Stand der Technik. Beispielhaft sind drei mobile Geräte 110, 120 und 130 gezeigt, die an bestimmten Stellen angeordnet sind mit dem Ziel, die Abdeckung per Funk durch die jeweils anderen mobilen Geräte zu messen. Jedes der gezeigten mobilen Geräte umfasst eine jeweilige Antenne, hier als Funkschnittstelle 117, 127 und 137 gezeigt, sowie eine jeweilige Diagnosesoftware 115, 125 und 135. Die Funkschnittstellen 117, 127 und 137 sind eingerichtet, Signale aus der Umgebung zu empfangen und/oder in die Umgebung zu senden. Die jeweilige Diagnosesoftware ist eingerichtet, mit der jeweiligen Funkschnittstelle zu kommunizieren und diese zu veranlassen, Signale zu senden und empfangene Signale zu messen und gegebenenfalls einzelnen Geräten zuzuordnen. So misst beispielsweise die Funkschnittstelle 117 Signale des Mobilgeräts 120 und des Mobilgeräts 130 beziehungsweise der jeweiligen Funkschnittstellen 127 und 137 und ordnet die Signale den jeweiligen Geräten zu. Analog misst die Funkschnittstelle 127 Signale des Mobilgeräts 110 und des Mobilgeräts 120 und ordnet die Signale zu. Die Funkschnittstelle kann eine USB-Funkschnittstelle sein und kann einen Prozessor zur Verarbeitung von Befehlen der Diagnosesoftware oder zur Verarbeitung von Befehlen, die auf der Funkschnittstelle selbst gespeichert sind, enthalten. Bekannt sind außerdem Systeme, bei denen anstelle der Mobilgeräte stationäre Geräte, beispielsweise PCs, verwendet werden.

Ausführungsformen der Erfindung umfassen Systeme auf mehreren mobilen Geräten, wobei sämtliche mobilen Geräte über eine Funkschnittstelle, jedoch wenigstens ein Gerät auch über eine Diagnosesoftware und wenigstens ein Gerät lediglich über eine Spannungsversorgung verfügt. In allen hier beschriebenen Ausführungsformen kann anstelle eines mobilen Geräts auch ein stationäres Gerät, etwa ein PC, verwendet werden.

Die Spannungsversorgung kann beispielsweise als eine Powerbank oder allgemein aufladbarer Akku oder sonstige Batterie gestaltet sein. Die Funkschnittstellen sind insbesondere als USB-Schnittstellen ausgeführt, die über einen Prozessor verfügen, der bestimmte Befehle verarbeiten kann. Derartige USB-Schnittstellen sind in der Lage, zu erkennen, ob sie an einen Datenbus oder lediglich an eine Spannungsversorgung angeschlossen sind.

In einer Ausführungsform sind die Funkschnittstellen mit integriertem Prozessor baugleich und speichern eine identische Abfolge von Befehlen. Jede der dieser Funkschnittstellen ist somit eingerichtet, zu ermitteln, ob sie an einen lokalen Datenbus angeschlossen ist. Ist dies der Fall, führt die Funkschnittstelle Befehle aus, um mit einer Diagnosesoftware, die auf dem gleichen mobilen Gerät wie die Funkschnittstelle installiert ist, zu kommunizieren. Als Folge dieser Kommunikation veranlasst die Diagnosesoftware die Funkschnittstelle, Signale an die Umgebung zu senden und aus der Umgebung zu empfangen, wobei bestimmte feste Parameter für beide Richtungen verwendet werden. Die Voreinstellung dieser Parameter auf dem mobilen Gerät kann beispielsweise von einem Hostcontroller, beispielsweise einem USB-Hostcontroller, auf diesem Gerät vorgenommen werden.

Erkennt eine Funkschnittstelle hingegen keinen Datenbus, beginnt sie mit dem Senden und Empfangen von Signalen unter Verwendung bestimmter Parameter, die vorzugsweise mit den von der Diagnosesoftware anderer Geräte verwendeten Parametern übereinstimmen. In einer Ausführungsform betreffen die Parameter technische Details der Signale, beispielsweise der Empfangs- und Sendefrequenzen sowie einer Wiederholfrequenz für das Senden und Empfangen. Die Parameter können auch eine Netzwerk- oder Domainadresse, eine eindeutige Adresse der jeweiligen Funkschnittstelle und/oder eine eindeutige Adresse des betreffenden Geräts enthalten. Das Signal enthält vorzugsweise einen Bezeichner des sendenden Geräts, mit dem dieses identifiziert werden kann. Alternativ oder zusätzlich kann das versendete Signal Ortsangaben des Geräts enthalten. Die Verwendung der genannten Parameter und das Senden/Empfangen von Signalen unter Verwendung dieser Parameter kann als Eintreten in einen Diagnosemodus betrachtet werden.

Die Diagnosesoftware empfängt die Signale der sendenden Geräte, misst deren Stärke und ordnet die Messungen anhand deren Bezeichnern und/oder deren Aufstellungsort den einzelnen Geräten zu. Zuletzt werden die Angaben lokal gespeichert und/oder einem Anwender angezeigt. In einer Ausführungsform nehmen auch diejenigen Geräte, die über keinen Datenbus und keine Diagnosesoftware verfügen, Messungen von empfangenen Signalen anderer Geräte vor. Auch diese Geräte können die Signale den sendenden Geräten zuordnen, beispielsweise anhand von übermittelten Bezeichnern und/oder Ortsangaben. Anders als bei Geräten mit Diagnosesoftware werden die Daten jedoch nicht gespeichert oder angezeigt, sondern vielmehr ebenfalls versendet, so dass sie bei Geräten mit Diagnosesoftware empfangen und verwendet werden können. Auf diese Weise erhält das wenigstens eine Gerät mit Diagnosesoftware umfassende Messergebnisse, die die Signalstärken an jedem der beteiligten Geräte enthalten, soweit deren Signale empfangen werden konnten.

Mit dem vorstehend beschriebenen Mechanismus können sämtliche Funkschnittstellen baugleich sein und unterschiedliche Entscheidungen hinsichtlich ihres Betriebs treffen, indem sie das gleiche Programm oder die gleiche Befehlsabfolge ausführen. Auf diese Weise können Funkreichweiten in einer vorbestimmten Umgebung systematisch erfasst werden. Einer der Vorteile der Erfindung ergibt sich direkt aus der Verwendung einfacher Funkschnittstellen, die zwar über einen Prozessor mit einfacher Befehlsabfolge, jedoch nicht über ein vollständiges Betriebssystem und Peripheriegeräte verfügen, sondern lediglich mit einer Spannungsversorgung gekoppelt sind. Solche Geräte sind günstig, verbrauchen sehr wenig Platz und können ohne weiteres auch an unzugänglichen Stellen aufgestellt werden, beispielsweise unter der Zimmerdecke oder an einem Fenster. Zudem verringert sich der benötigte Aufwand an Hardware. Ferner sind nach der Messung alle Ergebnisse auf einem Gerät verfügbar und müssen nicht erst synchronisiert werden.

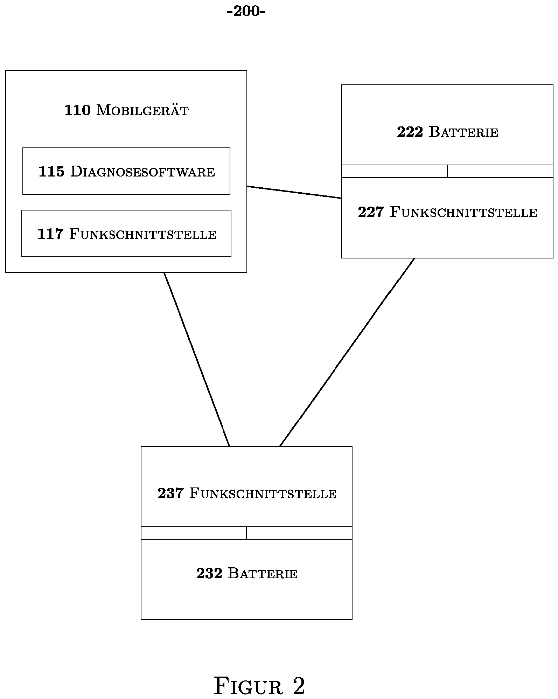

Figur 2 zeigt beispielhaft ein mobiles Gerät 210 sowie zwei Funkschnittstellen 227 und 237, die jeweils mit einer Batterie 222 beziehungsweise 232 verbunden sind. Das Gerät 210 verfügt ebenfalls über eine Funkschnittstelle 217 sowie eine Diagnosesoftware 215. Jede der Funkschnittstellen 217, 227 und 237 enthält einen Prozessor. Die Funkschnittstellen 227 und 237 sind nicht an einen Datenbus gekoppelt und haben keinen Zugriff auf weitergehende Software oder Befehle oder ein Betriebssystem. Das Gerät 210 ist beispielsweise ein Notebook oder Smartphone oder anderes Mobilgerät und verfügt ebenfalls über eine Batterie (nicht gezeigt). Die Diagnosesoftware 215 wird von einem Betriebssystem des Mobilgeräts 210 gestartet und läuft auf dessen Prozessor (nicht gezeigt) unter Verwendung eines lokalen Hauptspeichers.

Jedes der Funkschnittstellen 217, 227 und 237 führt einige Schritte aus, um eine Signalmessung der Funkschnittstellen 217, 227, 237 beziehungsweise des Geräts 210 untereinander durchzuführen. Diese Schritte können in Form von Softwarebefehlen implementiert sein. Auf dem Mobilgerät 210 können die Schritte durch einen Benutzer ausgelöst werden, der mit der Diagnosesoftware interagiert. Auf den Funkschnittstellen 227 und 237 können die Schritte ausgelöst werden, sobald die Funkschnittstellen eingeschaltet werden und/oder die Funkschnittstellen 227 und 237 mit der jeweiligen Batterie 222, 232 gekoppelt werden. Die ausgelösten Schritte umfassen eine Prüfung auf der jeweiligen Funkschnittstelle 227, 237 beziehungsweise dem Gerät 210, um festzustellen, ob die jeweilige Funkschnittstelle 217, 227, 237 mit einem Datenbus eines Geräts verbunden ist. Diese Prüfung ist auf dem Mobilgerät 210 positiv und auf den Funkschnittstellen 227 und 237 negativ. Wurde der Datenbus gefunden, sendet die betreffende Funkschnittstelle, hier lediglich die Funkschnittstelle 217, eine Mitteilung an die Diagnosesoftware 215. Diese startet daraufhin ein Verfahren zum Messen von Signalstärken in der Umgebung. Dieses Verfahren umfasst das Empfangen von Signalen anderer Geräte, hier der Funkschnittstellen 227 und 237, und das Senden von Signalen an diese. Wie bereits beschrieben, können an den Funkschnittstellen 227 und 237 Messungen an den dort empfangenen Signalen vorgenommen und diese Messungen an die Funkschnittstelle 217 zurückgesendet werden, die diese Daten an die Diagnosesoftware 215 überträgt. Die Diagnosesoftware 215 ordnet die empfangenen Signale sowie die von der Funkschnittstelle 217 erhaltenen und auch die von dieser Funkschnittstelle erzeugten Messergebnisse jeweiligen Geräten zu und erstellt eine Übersicht der Signalstärken. Diese Übersicht kann beispielsweise in Form einer Matrix angefertigt werden, die für jedes Gerät (einschließlich Gerät 210) beziehungsweise jede Funkschnittstelle je eine Spalte und eine Zeile umfasst und in jeder Richtung die gemessene Signalstärke enthält. Die Matrix kann mit einem Tupel assoziiert sein, das die Anordnung der beteiligten Geräte wiedergibt, beispielsweise in Form einer Koordinate oder sonstigen Ortsangabe für jedes Gerät.

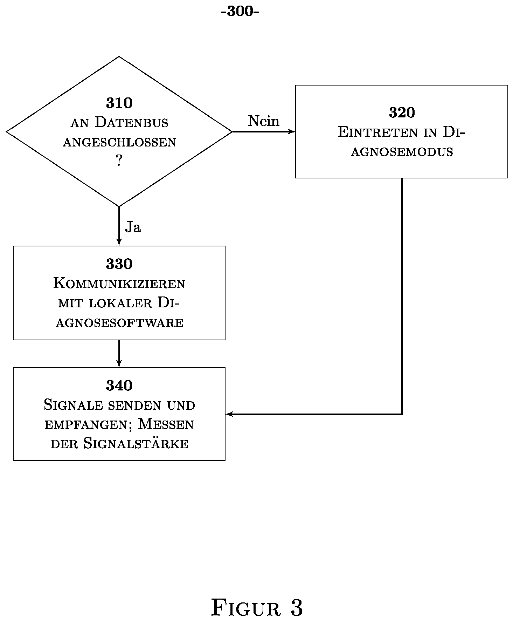

Figur 3 zeigt ein erfindungsgemäßes Verfahren 300 zur optimierten Messung von Signalen in einem Funknetzwerk. Das Verfahren 300 wird vorzugsweise auf dem Gerät 210 und eventuell vorhandenen weiteren vergleichbar eingerichteten Geräten sowie auf den Funkschnittstellen 227 und 237 und eventuell weiteren Funkschnittstellen ausgeführt. Die Anzahl und Anordnung dieser Geräte und Funkschnittstellen ist unbeschränkt, jedoch ist wenigstens ein Gerät mit Diagnosesoftware 215 und wenigstens eine einzelne Funkschnittstelle mit angeschlossener Batterie enthalten. Das Verfahren wird von einem Prozessor auf der jeweiligen Funkschnittstelle beziehungsweise der Funkschnittstelle des Geräts oder der Geräte ausgeführt.

In Schritt 310 prüft das Verfahren, ob die Funkschnittstelle, auf der das Verfahren läuft, an einen Datenbus angeschlossen ist. In einer Ausführungsform kann es sich um einen USB-Datenbus handeln, und die Funkschnittstellen sind USB-Funkschnittstellen. Das USB-Protokoll ermöglicht den Betrieb von USB-Vorrichtungen unabhängig davon, ob diese lediglich an eine Stromversorgung oder auch an einen Datenbus angeschlossen sind.

Ist eine Funkschnittstelle an einen Datenbus angeschlossen, verständigt das auf der Funkschnittstelle ausgeführte Verfahren 300 in Schritt 330 eine lokal installierte Diagnosesoftware mittels eines entsprechenden Befehls. Die Diagnosesoftware veranlasst die Funkschnittstelle daraufhin, eingehende Signale von anderen Geräten zu erfassen und deren Stärke zu messen (Schritt 340). Die Signale können Angaben zu den jeweiligen Geräten enthalten, insbesondere einen eindeutigen Bezeichner und/oder Angaben zur Position eines Geräts. Diese Angaben werden in einer lokalen Datenstruktur erfasst, beispielsweise in der bereits erläuterten Matrixform. Die Diagnosesoftware veranlasst die Funkschnittstelle ferner, Signale zu versenden, die andere Geräte in der Umgebung umfassen können. Auch diese Signale können Angaben zu dem versendenden Gerät und dessen Position enthalten. Diese Signale werden von Geräten in der Nähe empfangen. Die Geräte messen die Stärke des Signals und senden Signale mit den Ergebnisse zurück an das Mobilgerät. Die Versendung und der Empfang von Signalen erfolgt unter Verwendung voreingestellter Parameter.

Ist die Funkschnittstelle nicht an einen Datenbus angeschlossen, setzt die Funkschnittstelle in Schritt 320 bestimmte Parameterwerte für das Senden und/oder Empfangen von Signalen (Wiederholfrequenz etc.) fest. Diese Parameterwerte werden sowohl von Geräten mit Diagnosesoftware/Datenbus als auch von einfachen Funkschnittstellen ohne eine solche Software verwendet. Die Funkschnittstelle misst mit diesen Parameterwerten in Schritt 340 empfangene Signale. Dies können Signale von beliebigen Geräten oder Funkschnittstellen in der Nähe sein.

In einer Ausführungsform kann Schritt 320 entfallen. Stattdessen verfügt die Funkschnittstelle über einen Schalter oder eine Anzeige mit angezeigter Benutzeroberfläche und eine Schaltfläche. Wird der Schalter/die Schaltfläche durch einen Anwender betätigt, tritt die Funkschnittstelle in den bereits beschriebenen Diagnosemodus ein, ohne das dies noch als Antwort auf die Prüfung in Schritt 310 erfolgen müßte. In einer weiteren Ausführungsform kann das Verfahren parallel von mehreren Funkschnittstellen in der einen oder anderen Variante (mit oder ohne Schritt 320) ausgeführt werden. Desgleichen können die oben beschriebenen Systeme sowohl Funkschnittstellen mit Schalter/Schaltfläche als auch ohne diese umfassen.

In einer Ausführungsform beenden alle beteiligten Geräte den in Schritt 340 durchgeführten Messvorgang. Dies kann nach Ablauf einer in jedem Gerät beziehungsweise Funkschnittstelle voreingestellten Zeitdauer erfolgen oder nach Ablauf einer durch das Gerät 210 vorgegebenen und übermittelten Zeitdauer oder auf Befehl von diesem Gerät an die anderen Geräte und Funkschnittstellen. Ein solcher Befehl kann beispielsweise ergehen, sobald das Gerät eine Matrix zur Speicherung aller Messwerte vervollständigt hat, oder nach Ablauf einer vorgegebenen Zeitdauer, innerhalb der keine weiteren Messwerte mehr an diesem Gerät erfasst wurden.

Das Verfahren 300 kann an einem mit der Diagnosesoftware ausgestatteten Gerät ausgelöst werden durch Benutzeraktion an diesem Gerät, beispielsweise mittels Interaktion mit einer grafischen Benutzeroberfläche der Diagnosesoftware und/oder Betätigen eines äußeren Schalters an dem Gerät. Alternativ kann das Verfahren auch an einzelnen Funkschnittstellen ausgelöst werden, wiederum durch einen Schalter oder bereits durch Verbindung der Funkschnittstelle mit einer Batterie.

Ausführungsformen der Erfindung umfassen weiter ein computerlesbares Medium, beispielsweise einen Speicher oder eine Funkschnittstelle, insbesondere eine USB-Funkschnittstelle mit darauf befindlichem Speicher. Auf dem Medium sind Befehle gespeichert, die, wenn sie durch einen Prozessor ausgeführt werden, eines der hier beschriebenen Verfahren durchführen.

## Patentansprüche

1. System (200), umfassend:
Wenigstens zwei Funk-USB-Schnittstellen (117, 227, 237), wobei wenigstens eine der Funk-USB-Schnittstellen (117, 227, 237) von einer eigenen Spannungsquelle (222, 232) versorgt wird und wenigstens eine der Funk-USB-Schnittstellen (117, 227, 237) mit einem mobilen oder stationären Gerät (110) verbunden ist, das über eine USB-Datenleitung verfügt, und durch das es mit Spannung versorgt wird;
wobei jede der Funk-USB-Schnittstellen (117, 227, 237) eingerichtet ist, zu prüfen, ob diese an eine USB-Datenleitung angeschlossen ist;
**dadurch gekennzeichnet, dass** die jeweilige Funk-USB-Schnittstelle (117, 227, 237) bei fehlender USB-Datenleitung in einen Diagnosemodus eintritt, der das Setzen eines oder mehrerer Kommunikationsparameter auf voreingestellte Werte umfasst;
wobei die jeweilige Funk-USB-Schnittstelle (117, 227, 237) bei Vorliegen einer USB-Datenleitung mit einer Diagnosesoftware (115) auf dem mobilen oder stationären Gerät (110) in Verbindung tritt, wobei die Diagnosesoftware (115) eingerichtet ist, andere Funk-USB-Schnittstellen (117, 227, 237) zu erkennen, die in den Diagnosemodus eingetreten sind, und für diese Funk-USB-Schnittstellen (117, 227, 237) Messungen der Verbindungsqualität mit den Funk-USB-Schnittstellen (117, 227, 237) durchzuführen.

2. System (200) nach Anspruch 1, wobei Funk-USB-Schnittstellen (117, 227, 237), die an eine USB-Datenleitung angeschlossen sind, durch einen Host, der auf dem mobilen beziehungsweise stationären Gerät (110) dieser USB-Datenleitung betrieben wird, konfiguriert werden.

3. System (200) nach Anspruch 1 oder 2, wobei die Kommunikationsparameter eine Frequenz, eine Netzwerk- oder Domainadresse, eine eindeutige Adresse der jeweiligen Funk-USB-Schnittstelle (117, 227, 237) und/oder eine eindeutige Adresse einer oder mehrerer der mobilen beziehungsweise stationären Geräte (110) umfassen.

4. System (200) nach einem der Ansprüche 1 bis 3, wobei die eigenen Spannungsquellen Powerbanks umfassen.

5. System (200), umfassend:
Wenigstens zwei Funk-USB-Schnittstellen (117, 227, 237), wobei wenigstens eine der Funk-USB-Schnittstellen (117, 227, 237) von einer eigenen Spannungsquelle (222, 232) versorgt wird und wenigstens eine der Funk-USB-Schnittstellen (117, 227, 237) mit einem mobilen oder stationären Gerät (110) verbunden ist, das über eine USB-Datenleitung verfügt und durch das es mit Spannung versorgt wird;
**dadurch gekennzeichnet, dass** jede der Funk-USB-Schnittstellen (117, 227, 237) einen Schalter enthält oder eine Benutzeroberfläche mit einer Schaltfläche anzeigt, bei dessen/deren Betätigung durch einen Anwender die jeweilige Funk-USB-Schnittstelle (117, 227, 237) in einen Diagnosemodus eintritt, der das Setzen eines oder mehrerer Kommunikationsparameter auf voreingestellte Werte umfasst;
wobei die jeweilige Funk-USB-Schnittstelle (117, 227, 237) bei Vorliegen einer USB-Datenleitung mit einer Diagnosesoftware (115) auf dem mobilen oder stationären Gerät (110) in Verbindung tritt, wobei die Diagnosesoftware (115) eingerichtet ist, andere Funk-USB-Schnittstellen (117, 227, 237) zu erkennen, die in den Diagnosemodus eingetreten sind, und für diese Funk-USB-Schnittstellen (117, 227, 237) Messungen der Verbindungsqualität mit den Funk-USB-Schnittstellen (117, 227, 237) durchzuführen.

6. Verfahren (300), umfassend:
Prüfen (310), durch eine Funk-USB-Schnittstelle (117, 227, 237), ob diese an eine USB-Datenleitung eines mobilen oder stationären Geräts (110) angeschlossen ist;
**gekennzeichnet durch**:
falls die Funk-USB-Schnittstelle (117, 227, 237) nicht an eine USB-Datenleitung angeschlossen ist, Eintreten (320) in einen Diagnosemodus, der das Setzen eines oder mehrerer Kommunikationsparameter auf voreingestellte Werte umfasst; und
falls die Funk-USB-Schnittstelle (117, 227, 237) an eine USB-Datenleitung angeschlossen ist, Eintreten (330) in eine Verbindung mit einer Diagnosesoftware (115) auf dem mobilen beziehungsweise stationären Gerät (110), Erkennen anderer Funk-USB-Schnittstellen (117, 227, 237), die in den Diagnosemodus eingetreten sind, durch die Diagnosesoftware (115), und Durchführen (340) von Messungen der Verbindungsqualität mit den Funk-USB-Schnittstellen (117, 227, 237).

7. Verfahren (300) nach Anspruch 6, ferner umfassend Konfigurieren der Funk-USB-Schnittstelle (117, 227, 237) durch einen Host auf dem mobilen beziehungsweise stationären Gerät (110), wenn die Funk-USB-Schnittstelle (117, 227, 237) an eine USB-Datenleitung dieses Geräts (110) angeschlossen ist.

8. Verfahren nach Anspruch 6 oder 7, wobei die Kommunikationsparameter eine Frequenz, eine Netzwerk- oder Domainadresse, eine eindeutige Adresse der Funk-USB-Schnittstelle (117, 227, 237) und/oder eine eindeutige Adresse einer oder mehrerer mobilen oder stationären Geräte (110) umfassen.

9. Verfahren, umfassend:
Eintreten einer Funk-USB-Schnittstelle (117, 227, 237) in einen Diagnosemodus als Antwort auf Betätigen eines Schalters oder eine Schaltfläche einer von der Funk-USB-Schnittstelle (117, 227, 237) angezeigten Benutzeroberfläche durch einen Anwender, wobei das Eintreten in den Diagnosemodus das Setzen eines oder mehrerer Kommunikationsparameter auf voreingestellte Werte umfasst;
Prüfen, durch eine Funk-USB-Schnittstelle (117, 227, 237), ob diese an eine USB-Datenleitung eines mobilen oder stationären Geräts (110) angeschlossen ist;
**gekennzeichnet durch**:
falls die Funk-USB-Schnittstelle (117, 227, 237) an eine USB-Datenleitung angeschlossen ist, Eintreten in eine Verbindung mit einer Diagnosesoftware (115) auf dem mobilen beziehungsweise stationären Gerät (110), Erkennen anderer Funk-USB-Schnittstellen (117, 227, 237), die in den Diagnosemodus eingetreten sind, durch die Diagnosesoftware (115), und Durchführen von Messungen der Verbindungsqualität mit den Funk-USB-Schnittstellen (117, 227, 237).

10. Computerlesbares Medium mit darauf gespeicherten Befehlen, die, wenn sie durch einen oder mehrere Prozessoren ausgeführt werden, das Verfahren nach einem der Ansprüche 6 bis 9 durchführen.

## Claims

1. A system (200) comprising:
at least two wireless USB interfaces (117, 227, 237), wherein at least one of the wireless USB interfaces (117, 227, 237) is powered by its own power source (222, 232) and at least one of the wireless USB interfaces (117, 227, 237) is connected to a mobile or stationary device (110) having a USB data line and by which it is powered;
wherein each of the wireless USB interfaces (117, 227, 237) is arranged to check whether it is connected to a USB data line;
**characterized in that** the respective wireless USB interface (117, 227, 237) enters a diagnostic mode comprising setting one or more communication parameters to preset values in the absence of a USB data line;
wherein the respective wireless USB interface (117, 227, 237) connects to diagnostic software (115) on the mobile or stationary device (110) in the presence of a USB data line, wherein the diagnostic software (115) is arranged to detect other wireless USB interfaces (117, 227, 237) that have entered the diagnostic mode and to perform measurements of connection quality with the wireless USB interfaces (117, 227, 237) for these wireless USB interfaces (117, 227, 237).

2. The system (200) according to claim 1, wherein wireless USB interfaces (117, 227, 237) connected to a USB data line are configured by a host operating on the mobile or stationary device (110) of this USB data line.

3. The system (200) according to claim 1 or 2, wherein the communication parameters comprise a frequency, a network or domain address, a unique address of the respective wireless USB interface (117, 227, 237) and/or a unique address of one or more of the mobile or stationary devices (110).

4. The system (200) according to any one of claims 1 to 3, wherein the own voltage sources comprise power banks.

5. A system (200) comprising:
at least two wireless USB interfaces (117, 227, 237), wherein at least one of the wireless USB interfaces (117, 227, 237) is powered by its own power source (222, 232) and at least one of the wireless USB interfaces (117, 227, 237) is connected to a mobile or stationary device (110) having a USB data line and by which it is powered;
**characterized in that** each of the wireless USB interfaces (117, 227, 237) includes a switch or displays a user interface with a button upon actuation of which by a user the respective wireless USB interface (117, 227, 237) enters a diagnostic mode comprising setting one or more communication parameters to preset values;
wherein the respective wireless USB interface (117, 227, 237) connects to diagnostic software (115) on the mobile or stationary device (110) in the presence of a USB data line, wherein the diagnostic software (115) is arranged to detect other wireless USB interfaces (117, 227, 237) that have entered the diagnostic mode and to perform measurements of connection quality with the wireless USB interfaces (117, 227, 237) for these wireless USB interfaces (117, 227, 237).

6. A method (300) comprising:
checking (310), by a wireless USB interface (117, 227, 237), whether it is connected to a USB data line of a mobile or stationary device (110);
**characterized by**:
if the wireless USB interface (117, 227, 237) is not connected to a USB data line, entering (320) a diagnostic mode comprising setting one or more communication parameters to preset values; and
if the wireless USB interface (117, 227, 237) is connected to a USB data line, entering (330) a connection with diagnostic software (115) on the mobile or stationary device (110), detecting, by the diagnostic software (115), other wireless USB interfaces (117, 227, 237) that have entered the diagnostic mode, and performing (340) measurements of connection quality with the wireless USB interfaces (117, 227, 237).

7. The method (300) according to claim 6, further comprising configuring, by a host on the mobile or stationary device (110), the wireless USB interface (117, 227, 237) when the wireless USB interface (117, 227, 237) is connected to a USB data line of this device (110).

8. The method according to claim 6 or 7, wherein the communication parameters comprise a frequency, a network or domain address, a unique address of the wireless USB interface (117, 227, 237) and/or a unique address of one or more of the mobile or stationary devices (110).

9. A method comprising:
entering, by a user, a wireless USB interface (117, 227, 237) into a diagnostic mode in response to actuation of a switch or a button of a user interface displayed by the wireless USB interface (117, 227, 237), wherein entering the diagnostic mode comprises setting one or more communication parameters to preset values;
checking, by a wireless USB interface (117, 227, 237), whether it is connected to a USB data line of a mobile or stationary device (110);
**characterized by**:
if the wireless USB interface (117, 227, 237) is connected to a USB data line, entering a connection with diagnostic software (115) on the mobile or stationary device (110), detecting, by the diagnostic software (115), other wireless USB interfaces (117, 227, 237) that have entered the diagnostic mode, and performing measurements of connection quality with the wireless USB interfaces (117, 227, 237).

10. A computer-readable medium having stored thereon instructions that, when executed by one or more processors, perform the method of any one of claims 6 to 9.

## Revendications

1. Système (200) comprenant :
au moins deux interfaces USB sans fil (117, 227, 237), dans lequel au moins une des interfaces USB sans fil (117, 227, 237) est alimentée par sa propre source de tension (222, 232) et au moins une des interfaces USB sans fil (117, 227, 237) est reliée avec un appareil mobile ou fixe (110) qui dispose d'un câble de données USB par l'intermédiaire duquel il est alimenté en tension ;
dans lequel chacune des interfaces USB sans fil (117, 227, 237) est conçue pour vérifier si celle-ci est raccordée à un câble de données USB ;
**caractérisé en ce que** l'interface USB sans fil (117, 227, 237) respective entre, en cas d'absence d'un câble de données USB, dans un mode de diagnostic qui comprend le réglage d'un ou plusieurs paramètres de communication à des valeurs préréglées ;
dans lequel l'interface USB sans fil (117, 227, 237) respective est reliée, en cas d'existence d'un câble de données USB, avec un logiciel de diagnostic (115) sur l'appareil mobile ou fixe (110), dans lequel le logiciel de diagnostic (115) est conçu pour détecter d'autres interfaces USB sans fil (117, 227, 237) qui sont entrées dans le mode de diagnostic et pour effectuer, pour ces interfaces USB sans fil (117, 227, 237), des mesures de la qualité de liaison avec les interfaces USB sans fil (117, 227, 237).

2. Système (200) selon la revendication 1, dans lequel les interfaces USB sans fil (117, 227, 237) qui sont raccordées à un câble de données USB sont configurées par un hôte, qui fonctionne sur l'appareil mobile respectivement fixe (110) de ce câble de données USB.

3. Système (200) selon la revendication 1 ou 2, dans lequel les paramètres de communication comprennent une fréquence, une adresse de réseau ou de domaine, une adresse unique de l'interface USB sans fil (117, 227, 237) et/ou une adresse unique d'un ou plusieurs des appareils mobiles respectivement fixes (110).

4. Système (200) selon l'une des revendications 1 à 3, dans lequel les sources de tension propres comprennent des batteries externes.

5. Système (200) comprenant :
au moins deux interfaces USB sans fil (117, 227, 237), dans lequel au moins une des interfaces USB sans fil (117, 227, 237) est alimentée par sa propre source de tension (222, 232) et au moins une des interfaces USB sans fil (117, 227, 237) est reliée avec un appareil mobile ou fixe (110) qui dispose d'un câble de données USB par l'intermédiaire duquel il est alimenté en tension ;
**caractérisé en ce que** chacune des interfaces USB sans fil (117, 227, 237) comprend un interrupteur ou affiche une interface utilisateur avec une touche qui, lorsqu'il/elle est actionné·e par un utilisateur, fait passer l'interface USB sans fil (117, 227, 237) en mode de diagnostic, qui comprend le réglage d'un ou plusieurs paramètres de communication à des valeurs préréglées ;
dans lequel l'interface USB sans fil (117, 227, 237), en cas d'existence d'un câble de données USB, est reliée à un logiciel de diagnostic (115) sur l'appareil mobile ou fixe (110), dans lequel le logiciel de diagnostic (115) est conçu pour détecter d'autres interfaces USB sans fil (117, 227, 237) qui sont entrées dans le mode de diagnostic et pour effectuer, pour ces interfaces USB sans fil (117, 227, 237), des mesures de la qualité de liaison avec les interfaces USB sans fil (117, 227, 237).

6. Procédé (300) comprenant :
la vérification (310), par une interface USB sans fil (117, 227, 237), si celle-ci est raccordée à un câble de données USB d'un appareil mobile ou fixe (110) ;
**caractérisé par** :
dans le cas où l'interface USB sans fil (117, 227, 237) n'est pas raccordée à un câble de données, passage à un mode de diagnostic qui comprend le réglage d'une ou plusieurs paramètres de communication à des valeurs pré-réglées ; et
dans le cas où l'interface USB sans fil (117, 227, 237) est raccordée à un câble de données USB, passage (330) à une liaison avec un logiciel de diagnostic (115) sur l'appareil mobile respectivement fixe (110), la détection d'autres interfaces USB sans fil (117, 227, 237), qui sont passées au mode de diagnostic, par le logiciel de diagnostic (115) et réalisation (340) de mesures de la qualité de liaison avec les interfaces USB sans fil (117, 227, 237).

7. Procédé (300) selon la revendication 6, comprenant en outre la configuration de l'interface USB sans fil (117, 227, 237) par un hôte sur l'appareil mobile respectivement fixe (110) lorsque l'interface USB sans fil (117, 227, 237) est raccordée à un câble de données USB de cet appareil (110).

8. Procédé (300) selon la revendication 6 ou 7, dans lequel les paramètres de communication comprennent une fréquence, une adresse de réseau ou de domaine, une adresse unique de l'interface USB sans fil (117, 227, 237) et/ou une adresse unique d'un ou plusieurs appareils mobiles respectivement fixes (110).

9. Procédé comprenant :
le passage d'une interface USB sans fil (117, 227, 237) dans un mode de diagnostic en réponse à l'actionnement d'un interrupteur ou d'une touche d'une interface utilisateur affichée par l'interface USB sans fil (117, 227, 237) par l'utilisateur, dans lequel le passage dans le mode de diagnostic comprend le réglage d'un ou plusieurs paramètres de communication à des valeurs préréglées ;
vérification, par une interface USB sans fil (117, 227, 237), si celle-ci est raccordée à un câble de données USB d'un appareil mobile ou fixe (110) ;
**caractérisé par** :
dans le cas où l'interface USB sans fil (117, 227, 237) est raccordée à un câble de données USB, passage à une liaison avec un logiciel de diagnostic (115) sur l'appareil mobile respectivement fixe (110), la détection d'autres interfaces USB sans fil (117, 227, 237), qui sont passées au mode de diagnostic, par le logiciel de diagnostic (115) et réalisation de mesures de la qualité de liaison avec les interfaces USB sans fil (117, 227, 237).

10. Support lisible par un ordinateur avec des instructions enregistrées dessus, qui, lorsqu'elles sont exécutées par un ou plusieurs processeurs, exécutent le procédé selon l'une des revendications 6 à 9.
